# EUROPÄISCHE PATENTANMELDUNG

(11) **EP 1 005 793 A1**
(43) Veröffentlichungstag der Anmeldung: **07.06.2000**
(21) Anmeldenummer: 99124122.5
(22) Anmeldetag: 02.12.1999
(51) Int. Cl.: A21C 3/08, A21C 9/08

(54) **Verfahren und Anordnung zur Brezelherstellung**

(30) Priorität: 04.12.1998 DE 19856049
(71) Anmelder: A. FRITSCH GMBH & CO. KG, D-97348 Markt Einersheim (DE)
(72) Erfinder: Wehner, Hans-Joachim, 49733 Haren (DE)
(74) Vertreter: Götz, Georg, Dipl.-Ing.

(57) **Zusammenfassung**

Verfahren zur Herstellung von Brezeln aus Teigmasse, mit den Schritten des Aufarbeitens und Knetens eines Brezelteigs, des Langwirkens von gebildeten Teigrollen (9) zu Brezelsträngen (11) und des Schlingens der Brezelstränge zu Brezeln (14), mit der Kombination der aufeinander folgenden Schritte:
a) Aufarbeiten und Kneten eines Brezelteigs
b) Ausrollen des Brezelteigs zu einem Teigband (3)
c) Ausschneiden von einzelnen Teigstücken (6) aus dem Teigband (3)
d) Wickeln der Teigstücke (6) zu Teigrollen (9)
e) Langwirken der Teigrollen (9) zu Brezelsträngen (11)
f) Schlingen der Brezelstränge (11) zu Brezeln (14).

## Beschreibung

Die Erfindung betrifft ein Verfahren und eine Anordnung zur Herstellung von Brezeln aus Teigmasse, wobei ein Brezelteig wie üblich aufgearbeitet und geknetet wird, im Zuge weiterer Herstellungsschritte entstandene Teigrollen zu Brezelsträngen geformt, und diese dann zu Brezeln geschlungen werden.

Für eine Herstellungsmethode etwa dieser Art ist eine Vorrichtung zum Auswalzen von walzenförmigen Rohteigrollen im Sinne von Brezelteigrollen bekannt (DE-A-24 53 050). Danach werden aus Teigklumpen walzenförmige Rohteigrollen und aus diesen langgewirkte Brezelstränge geformt. Diese werden durch Umschlagen der Strangenden in die charakteristische Brezelform umgewandelt. Zur Bildung der walzenförmigen Rohteigrollen wird eine an sich bekannte Hörnchenwickelmaschine vorgeschlagen. Die Teigklumpen werden in die Hörnchenwickelmaschine eingegebenen und verlassen diese als Teigrollen. Letztere werden in eine nachgeschaltete Vorrichtung zum Auswalzen von den Rohteigrollen im Sinne von Brezelsträngen mit verdickter Mitte und dünneren Enden eingeführt.

Allerdings müssen bei dieser Methode die Teigklumpen durch Teigteilen in Grundstücke erzeugt werden. Dazu sind sogenannte Kopfmaschinen bekannt (vgl. Schünemann/Treu "Technologie der Backwarenherstellung", Gildebuchverlag 6. Auflage 1998, insbesondere Seite 59 oder Abbildung Nummer 115), die geknetete Teige in Portionen teilen, die dem Gewicht der Brezel entsprechen. Diese Portionen werden zu Rundstücken rundgeschliffen (rundgewirkt), um den Portionen eine runde Form zu geben. Kopfmaschinen arbeiten in der Regel mehrreihig, so daß die Rundstücke vor Übergabe in den Gärraum gespreizt werden müssen, um Platz für die Volumenentwicklung der Rundstücke zu erhalten. In der Gare entwickelt sich der Teig und Spannungen, die vor allem durch das Rundschleifen in den Teig eingebracht werden, sollen dadurch beseitigt werden. Die Rundstücke werden einer Wickelmaschine, beispielsweise der oben genannten Hörnchenwickelmaschine, übergeben, die die Rundstücke zu einem Fladen auswalzt und diesen Fladen zu einem Hörnchen aufwickelt. Dieses wird in einer Langwirkmaschine, beispielsweise die zuvor genannte Auswalzvorrichtung, weiterbearbeitet, worin ein Brezelstrang geformt bzw. langgewirkt wird. Diese Brezel wird manuell oder mit einer Schlingmaschine geschlungen. Zu weiteren Einzelheiten und zum Hintergrund der Brezelherstellung wird die DE-Zeitschrift "Getreide, Mehl und Brot", 8/1983, Seiten 243 - 248 im Artikel "Herstellung von frischem Laugengebäck" von U. Felch verwiesen. Nachteilig ist bei dem genannten Stand der Technik, daß der Rundschleifprozeß beispielsweise zur Bildung der Teigklumpen eine Verschlechterung der Teigqualität mit sich bringt, welche durch die Gare wieder beseitigt werden muß.

Der Erfindung liegt die Aufgabe zugrunde, die für die Brezelherstellung notwendigen Verfahrensschritte und Maschinenkomponenten reduzieren zu können, die Herstellungsgeschwindigkeit zu erhöhen und gleichzeitig eine zumindest gleichbleibende, eher verbesserte Teigqualität zu erzielen.

Zur Lösung wird bei einem Verfahren mit den eingangs genannten Merkmalen die Kombination der aufeinanderfolgenden Schritte vorgeschlagen:
a) Aufarbeiten und Kneten eines Brezelteigs
b) Ausrollen des Brezelteigs mit einem Teigband
c) Ausschneiden von einzelnen Teigstücken aus dem Teigband
d) Wickeln der Teigstücke zu Teigrollen
e) Langwirken der Teigrollen zu Brezelsträngen
f) Schlingen der Brezelstränge zu Brezeln.

Analog wird bei einer Teigverarbeitungs-Anordnung der eingangs genannten Art die folgende funktionelle Reihenfolge von Teigverarbeitungskomponenten vorgeschlagen
a) eine Teigausrollanlage zur Erzeugung eines Teigbandes
b) eine nachgeordnete Schneideinheit zum Herausschneiden getrennter Teigstücke aus dem Teigband
c) eine nachgeordnete Wickeleinheit zur Umformung der Teigstücke in Hörnchenstücke
d) eine nachgeordnete Langwirkeinheit zur Umformung der Hörnchenstücke in Brezelstränge
e) eine nachgeordnete Brezelschlingeinheit zur Bildung der Brezeln aus den Strängen.

Bei der erfindungsgemäßen Brezelherstellung wird der geknetete Teig zu einem Teigband ausgerollt. Aus dem Teigband werden vorzugsweise teigrestefrei beispielsweise Rechtecke oder Trapeze ausgeschnitten und zu Hörnchen gewickelt. Das Hörnchen wird einer Langwirkmaschine übergeben, welche daraus einen Brezelstrang formt (langwirkt). Der Brezelstrang wird manuell oder mit einer Schlingmaschine automatisch geschlungen. Die für das erfindungsgemäße Herstellungssystem notwendigen Maschinenkomponenten sind grundsätzlich für sich genommen auf dem Markt erhältlich (ergänzend: DE A 197 23 414 wegen Schneidmittel, deutsche Auslegeschrift DE 1 069 541 wegen Teigwickler) und damit schnell und unter Einsparung von zusätzlichen Entwicklungskosten zur erfindungsgemäßen Herstellungsanordnung zusammenstellbar.

Das erfindungsgemäße Brezel-Herstellungssystem vermeidet den Umweg, zunächst mit einer aufwendigen Kopfmaschine den Teigklumpen oder ein sonstiges Rundstück herzustellen. Vielmehr wird die direkte Herstellung eines flächigen Teigstücks vorgenommen, wobei mittels moderner verfügbarer Ausrollmaschinen, insbesondere Satellitenkopfmaschinen, der Teig besonders schonend behandelt werden kann. Ein weiterer Vorteil der erfindungsgemäßen Brezelherstellung liegt darin, daß Brezeln auf zumindest Teilen bereits vorhandener Laminieranlagen hergestellt werden können und somit die Auslastung der Laminieranlage verbessert wird bzw. die Investition in eine gesonderte Brezelanlage entfällt.

Nach einer besonderen Ausbildung des erfindungsgemäßen Verfahrens wird den Teigrollen durch einen entsprechenden Wickler die Form eines Hörnchens verliehen. Hörnchenwickelmaschinen sind auf dem Markt an sich in großer Vielfalt erhältlich. Zudem nimmt die charakteristische Hörnchenform mit ihrer mittigen Ausbauchung bzw. ihren verdünnten Enden bereits die charakteristische Form eines Strangs für eine schwäbische Brezel vorweg.

Zweckmäßig ist der Teigausrollanlage eine Knetanlage vorgeschaltet, die beispielsweise als Kneterkarussell ausgeführt sein kann. Anzustreben sind Kneter, die einen ununterbrochenen Teigfluß ermöglichen.

Im Zusammenhang mit dem restteigfreien Herausschneiden von Teigstücken besteht eine Ausbildung der Erfindung darin, daß der Schneideinheit Spreizmittel, beispielsweise in Form eines oder mehrerer Spreizbänder nachgeordnet sind. Dadurch wird Platz geschaffen, die Teigstücke in sich zu drehen oder zu wenden.

Weitere Einzelheiten, Merkmale, Vorteile und Wirkungen auf der Basis der Erfindung ergeben sich aus der nachfolgenden Beschreibung bevorzugter Ausführungswege der Erfindung und den Zeichnungen. Diese zeigen in:
- Figuren 1 und 2: in vergleichender Darstellung Flußdiagramme für die Brezellinien-Verfahrensabläufe nach dem Stand der Technik bzw. nach der Erfindung,
- Figur 3: in schematisch-gerätetechnischer Darstellung eine erfindungsgemäße Anordnung von Teigverarbeitungskomponenten.

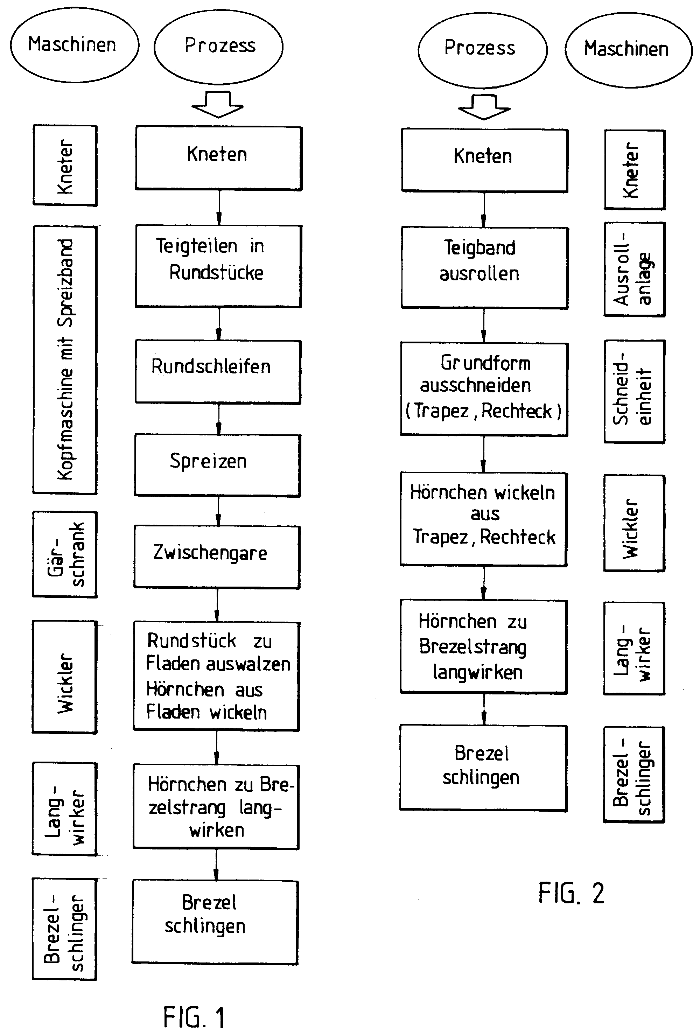

Die Flußdiagramme für die Brezellinien nach dem Stand der Technik in Figur 1 und nach der Erfindung in Figur 2 sind so ausführlich mit Text versehen und daher für den Fachmann ohne weiteres verständlich, daß sich weitere Erläuterungen erübrigen.

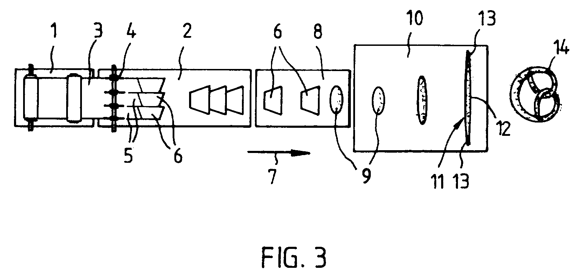

Gemäß Figur 2 ist einer Ausrollanlage 1, der (ein nicht gezeichneter) Kneter vorgeordnet ist, eine Schneideinheit 2 nachgeschaltet. In der Ausrollanlage 1 wird vorher gekneteter Teig zu einem Teigband 3 geformt, der in seiner Längsrichtung von entsprechenden ausgerichteten Schneidrädern 4 zu einzeln Teigbandstreifen 5 geschnitten wird. Mit (nicht dargestellten) Quer- oder Schrägschneidemitteln lassen sich die einzelnen Teigstreifen 5 zu Einzelteigstücken 6 mit mehreckiger Grundform (Rechtecke, Trapeze usw.) gestalten, wobei ein restteigfreies Teigschneiden bevorzugt ist, wie es durch die dargestellten Trapezteigstücke möglich ist. Gemäß Figur 3 werden immer drei Trapez-Einzelteigstücke nebeneinander zugeschnitten, wobei eine solche Dreierreihe um 90 ° mit (nicht dargestellten) Drehmitteln so verdreht wird, daß die Längsrichtung der Dreierreihe in Transportrichtung 7 verläuft. In einem Wickler 8, der der Schneideinheit 2 nachgeschaltet ist, werden die Einzelteigstücke 6 (mit nicht dargestellten Spreizmitteln oder dergleichen) zunächst voneinander in Transportrichtung beabstandet und dann zu Hörnchen 9 gewickelt. Dem Wickler 8 ist ein Langwirker 10 nachgeschaltet, in dem die Hörnchen 9 zu Brezelsträngen 11 beispielsweise mit verdickter Mitte 12 und verdünnten Enden 13 gestaltet werden. Nach dem Langwirker 10 kann das Schlingen der Brezel 14 entweder von Hand oder mit einem automatischen Brezelschlinger, wie an sich bekannt, erfolgen.

### Bezugszeichenliste

- 1: Ausrollanlage
- 2: Schneideinheit
- 3: Teigband
- 4: Schneidräder
- 5: Teigbandstreifen
- 6: Einzelteig-Stücke
- 7: Transportrichtung
- 8: Wickler
- 9: Hörnchen
- 10: Langwirker
- 11: Brezelstrang
- 12: verdickte Mitte
- 13: verdünntes Ende
- 14: Brezel

## Patentansprüche

1. Verfahren zur Herstellung von Brezeln aus Teigmasse, mit den Schritten des Aufarbeitens und Knetens eines Brezelteigs, des Langwirkens von gebildeten Teigrollen (9) zu Brezelsträngen (11) und des Schlingens der Brezelstränge (11) zu Brezeln (14), **gekennzeichnet durch** die Kombination der aufeinander folgenden Schritte :
a) Aufarbeiten und Kneten eines Brezelteigs
b) Ausrollen des Brezelteigs zu einem Teigband (3)
c) Ausschneiden von einzelnen Teigstücken (6) aus dem Teigband (3)
d) Wickeln der Teigstücke (6) zu Teigrollen (9)
e) Langwirken der Teigrollen (9) zu Brezelsträngen (11)
f) Schlingen der Brezelstränge (11) zu Brezeln (14).

2. Verfahren nach Anspruch 1, dadurch gekennzeichnet, dass den Teigrollen (9) beim Wickeln die Form eines Hörnchens verliehen wird.

3. Verfahren nach Anspruch 1 oder 2, dadurch gekennzeichnet, dass aus dem Teigband (3) mehreckige Teigstücke (6) restteigfrei herausgeschnitten werden.

4. Verfahren nach Anspruch 3, dadurch gekennzeichnet, dass die Teigstücke (6) auseinander bewegt werden.

5. Verfahren nach Anspruch 3 oder 4, dadurch gekennzeichnet, dass die Teigstücke (6) um eine eigene Körperachse gedreht werden.

6. Verfahren nach einem der vorangehenden Ansprüche, dadurch gekennzeichnet, dass aus dem Teigband (3) Teigstücke (6) in Rechteck- oder Trapezform und/oder in einer quer- oder längsverlaufenden Reihe herausgeschnitten werden.

7. Anordnung von maschinellen Teigverarbeitungskomponenten zur Durchführung des Verfahren nach einem der vorangehenden Ansprüche, mit einer Langwirkeinheit (10) zur Erzeugung von Brezelsträngen und einer Brezelschlingeinheit, **gekennzeichnet durch** folgende Reihenfolge:
a) eine Teigausrollanlage (1) zur Erzeugung eines Teigbandes (3)
b) eine nachgeordnete Schneideinheit (2) zum Herausschneiden getrennter Teigstücke (6) aus dem Teigband (3)
c) eine nachgeordnete Wickeleinheit (8) zur Umformung der Teigstücke (6) in Teigrollen, insbesondere Hörnchenstücke (9)
d) eine nachgeordnete Langwirkeinheit (10) zur Umformung der Teigrollen in Brezelstränge (11)
e) eine nachgeordnete Brezelschlingeinheit zur Bildung der Brezeln (14) aus den Brezelsträngen (11).

8. Anordnung nach Anspruch 7, dadurch gekennzeichnet, dass der Teigausrollanlage (1) eine Knetanlage vorgeschaltet ist.

9. Anordnung nach Anspruch 7 oder 8, dadurch gekennzeichnet, dass der Schneideinheit (2) Spreizmittel zum Auseinanderbewegen der Teigstücke insbesondere in Form eines oder mehrerer Spreizbänder zu- oder nachgeordnet sind.

10. Anordnung nach einem der vorangehenden Ansprüche, dadurch gekennzeichnet, dass der Schneideinheit (2) und gegebenenfalls den Spreizmitteln eine Dreh- und/oder Wendestation für die Teigstücke (6) nachgeschaltet ist.
